# EUROPÄISCHE PATENTSCHRIFT

(11) **EP 3 672 830 B1**
(45) Veröffentlichungstag und Bekanntmachung des Hinweises auf die Patenterteilung: **07.06.2023**
(21) Anmeldenummer: 18765057.7
(22) Anmeldetag: 27.08.2018
(51) Int. Cl.: B60N 2/06, B60N 2/42, B60N 2/427

(54) **FAHRZEUGSITZKONSOLE**
VEHICLE SEAT CONSOLE
BASE DE SIÈGE DE VÉHICULE

(30) Priorität: 25.08.2017 DE 102017214926
(43) Veröffentlichungstag der Anmeldung: 01.07.2020
(73) Patentinhaber: Bayerische Motoren Werke Aktiengesellschaft, 80809 München (DE)
(72) Erfinder: HUF, Andreas, 86356 Neusäß (DE); KÖHLER, Fabian, 80336 München (DE); KLEINDL, Sylvia, 81476 München (DE); MARTIN, Robert, 80807 München (DE); HUFNAGL, Klaus, 80999 München (DE); PAINER, Robert, 80939 München (DE)
(86) Internationale Anmeldenummer: PCT/EP2018/073049
(87) Internationale Veröffentlichungsnummer: WO 2019/038455

(56) Entgegenhaltungen:
- WO-A1-2006/021749
- WO-A1-2006/068567
- CN-A- 101 863 238
- DE-A1- 10 353 245
- DE-A1-102008 025 135
- DE-A1-102017 213 312
- US-A- 4 232 895

## Beschreibung

### TECHNISCHES GEBIET

Die Erfindung betrifft eine Fahrzeugsitzkonsole nach dem Oberbegriff des Patentanspruchs 1. Die Erfindung betrifft weiterhin einen Fahrzeugsitz mit einer solchen Fahrzeugsitzkonsole sowie ein Kraftfahrzeug mit zumindest einem derartigen Fahrzeugsitz.

### HINTERGRUND DER ERFINDUNG

Gurtsysteme und Airbags sind seit Jahrzehnten anerkannte Insassenschutzsysteme von Kraftfahrzeugen. Sie reduzieren die Belastungen auf die Insassen eines Fahrzeugs im Fall einer Fahrzeugkollision zumeist nur in definierten, aufrechten Sitzpositionen. Liegepositionen werden jedoch besonders bei vollautomatisiertem Fahren immer wichtiger, so dass auch ein adäquater Insassenschutz in solchen Liegepositionen gewährleistet sein muss. Mit den bekannten Insassenschutzsystemen jedoch können im Fall einer Fahrzeugkollision die Belastungen auf den Insassen bei liegender oder halbliegender Position nicht ausreichend reduziert werden. Es bedarf daher einer Weiterentwicklung der Insassenschutzsysteme, durch die im Fall einer Fahrzeugkollision die Beschleunigung des Körpers eines Fahrzeuginsassen auch bei liegender bzw. halbliegender Position auf ein festgelegtes Maß begrenzt wird. Dazu kann eine die kinetische Energie dämpfende Relativverschiebbarkeit zwischen dem Fahrzeugsitz und dem Fahrzeugchassis vorgesehen sein. Ist die Fahrzeugsitzkonsole zum Zweck der Sitzlängsverstellung mit einer Längsverstelleinrichtung versehen, die selbsthemmend ist, beispielsweise mit einem Spindelantrieb, so muss dabei zunächst die Selbsthemmung aufgehoben werden um die Relativverschiebbarkeit zu ermöglichen, es muss also eine Entkopplung in der Längsverstelleinrichtung erfolgen. Das erfordert eine aufwendige Konstruktion mit zusätzlichem Sensorikaufwand.

### STAND DER TECHNIK

Aus der DE 103 53 245 A1 ist eine Längsverstelleinrichtung für einen Fahrzeugsitz bekannt, bei der zwischen der sitzseitigen Führungseinrichtung und einer mit einer fahrzeugfesten Spindelwelle in Eingriff stehenden Spindel eine Kraftbegrenzungsvorrichtung vorgesehen ist, die bei einer Überlast gestaucht und somit unter Aufnahme von kinetischer Energie verformt wird. Die zum Einleiten einer solchen Materialstauchung erforderliche Auslösekraft ist erheblich und kann möglicherweise für eine auf dem Sitz in einer Ruhe- oder Liegeposition befindliche Person unerwünscht hoch sein. Die Fahrzeugsitzkonsole weist eine fahrzeugfeste Unterschiene und eine am Fahrzeugsitz angebrachte Oberschiene auf, die gegenüber der Unterschiene verschiebbar ist. Mit der fahrzeugfesten Unterschiene ist die Spindelwelle mittels zweier endseitiger Halterungen auf der Unterschiene fest angeordnet. Die Spindelwelle kann auch in den Halterungen drehbar gelagert sein. Mit der Spindelwelle wirkt ein Getriebe zusammen, welches in einem Hohlraum zwischen der Oberschiene und einem darunter U-förmig ausgebildeten und mit der Oberschiene fest verbundenen Halteelement angeordnet ist. Das Gehäuse des Getriebes, welches eine in das Außengewinde der Spindelwelle eingreifende Spindelmutter und eine damit kämmende Antriebsschnecke aufweist, liegt an einer Innenseite eines der vertikalen Halteschenkel des U-förmigen Halteelements an. Zwischen dem Gehäuse des Getriebes und dem anderen vertikalen Schenkel des Halteelements ist ein mechanisches Verformungselement, beispielsweise das Stülprohr, vorgesehen. Ein Antriebsmotor ist an einer Halteplatte befestigt, die mit der Oberschiene und damit mit dem Fahrzeugsitz fest verbunden ist. Der Antriebsmotor ist über eine bevorzugterweise flexible Antriebswelle mit der Antriebsschnecke des Getriebes gekoppelt, um diese antreiben zu können. Im Falle eines Heckaufpralls, für den diese Dämpfungsvorrichtung nur vorgesehen ist, verschiebt sich aufgrund der kollisionsbedingten Trägheitskräfte der Fahrzeugsitz und damit die Oberschiene mit dem Halteelement relativ zur Unterschiene nach hinten, wodurch das im Gewindeeingriff mit der fahrzeugfesten Spindelwelle stehende und im Gewindeeingriff verbleibende Getriebe gegen das Verformungselement drückt und dieses verformt. Dabei verbleibt das Getriebe an derselben Stelle der Spindelwelle. Das Getriebe und die Spindelwelle bewegen sich also nicht relativ zueinander, aber es findet eine Relativbewegung zwischen dem Getriebe und der Oberschiene mit dem Fahrzeugsitz und dem Antriebsmotor statt, die offensichtlich über die flexible Antriebswelle des Antriebsmotors ausgeglichen wird. Im Falle eines Frontalaufpralls erfolgt keine nennenswerte Relativbewegung, sondern die Dämpfung ist nur im Falle eines Heckaufpralls wirksam.

Die US 4 232 895 A zeigt und beschreibt einen Fahrzeugsitz, der mittels einer Sitzkonsole längsverschiebbar auf einem Innenraumboden eines Fahrzeugs befestigt ist. Zwischen dem Sitzrahmen des Fahrzeugsitzes und dem fahrzeugfesten Teil der Sitzkonsole ist ein Energieabsorptionsmechanismus vorgesehen, um den Sitz im Falle einer Kollision aus seiner trägheitsbedingten Weiterbewegung abzubremsen. Die Längsverstellung dieses Fahrzeugsitzes erfolgt manuell, wozu eine fahrzeugfeste, längs verlaufende Stange vorgesehen ist, die eine Mehrzahl von axial voneinander beabstandeten Ringflanschen aufweist. Eine sitzseitig montiere Klaue ist ausgebildet, um einen entsprechenden dieser Flansche zu übergreifen und den Sitz an diesem Flansch in Längsrichtung zu arretieren. Alternativ ist eine mit Zähnen versehene fahrzeugfeste Schiene vorgesehen, wobei eine sitzseitige Klaue in die Zahnzwischenräume einrasten kann. Die mit den Ringflanschen versehene Stange ist mittels Klemmelementen an der unteren fahrzeugfesten Schiene befestigt, wobei ein Klemmelement zwischen zwei vertikale Schenkel der im Querschnitt U-förmig ausgebildeten unteren fahrzeugfesten Schiene eingesetzt ist. Im Falle einer Kollision bewegt sich der Fahrzeugsitz trägheitsbedingt gegenüber der Fahrzeugstruktur weiter und über die mit einem Ringflansch der Stange in Eingriff befindliche Klaue wird diese Weiterbewegung auf die Stange übertragen, die dann mit ihrem Klemmelement relativ zur unteren Schiene bewegt wird. Dabei spreizt das Klemmelement die U-förmigen Schenkel der unteren Schiene auseinander und baut auf diese Weise kinetische Energie ab.

Die DE 10 2008 025 135 A1 zeigt und beschreibt einen Fahrzeugsitz, der mittels einer sitzseitig montierten Oberschiene und einerfahrzeugstrukturseitig montierten Unterschiene relativ zur Fahrzeugstruktur verschiebbar ist. Zwischen dem Fahrzeugsitz und der Oberschiene (oder der Unterschiene und der Fahrzeugstruktur) ist ein Deformationselement vorgesehen, das einen geschlitzten Verformungsabschnitt aufweist, dessen Schlitz beidseitig in runden Öffnungen endet, deren Durchmesser größer ist als die breite des Schlitzes. Eine der Öffnungen ist von einem Halteelement durchdrungen, dessen Durchmesser ebenfalls größer ist als die Breite des Schlitzes. Im Fall eines Heckaufpralls verschiebt sich das Halteelement relativ zum Deformationselement , dringt in den Schlitz ein und verformt diesen unter Abbau von kinetischer Energie.

Die WO 2006/068567 A1 zeigt und beschreibt eine Fahrzeugsitzkonsole, bei der zwischen einer sitzseitigen Oberschiene und einer fahrzeugseitigen Unterschiene ein Kraftbegrenzungselement vorgesehen ist, das eine entgegen der Fahrtrichtung des Fahrzeugs gerichtete Verlagerung des Fahrzeugsitzes dämpft, wie sie beispielsweise auftritt, wenn im Falle einer Frontalkollision eine vor dem Fahrzeugsitz gelegene Fahrzeugkomponente crashbedingt nach hinten gegen einen auf dem Sitz sitzenden Passagier verlagert wird und dieser dann mitsamt dem Fahrzeugsitz nach hinten geschoben wird.

Die WO 2006/021749 A1 zeigt und beschreibt eine Befestigungsvorrichtung für einen Kindersitz in einem Fahrzeug, wobei die Befestigungsvorrichtung eine Energieabsorptionseinrichtung aufweist, die mittels Schneidkanten in ein Gegenstück einschneidet, wobei kinetische Energie abgebaut wird.

Die CN 101863238 A zeigt und beschreibt einen Fahrzeugsitz mit einer Fahrzeugsitzkonsole, die ein bei einem Heckaufprall wirksames Deformationselement mit einem plastisch verformbaren Stahlband aufweist.

### DARSTELLUNG DER ERFINDUNG

Aufgabe der vorliegenden Erfindung ist es, eine gattungsgemäße Fahrzeugsitzkonsole anzugeben, die ausgebildet ist, um im Fall einer Fahrzeugkollision die Belastungen auf den Körper einer auf dem Fahrzeugsitz befindlichen Person zuverlässig ausreichend zu begrenzen, auch wenn diese Person sich in einer liegenden oder halbliegenden Position befindet, ohne dass eine aufwendige Sensorik zur Außerbetriebsetzung der Selbsthemmung der Längsverstelleinrichtung erforderlich ist.

Diese Aufgabe wird gelöst mit den Merkmalen der jeweiligen unabhängigen Patentansprüche 1, 3 oder 4.

Eine Fahrzeugsitzkonsole mit zumindest einem fahrzeugseitigen Führungselement und zumindest einem parallel zum fahrzeugseitigen Führungselement angeordneten sitzseitigen Führungselement sowie zumindest einer von einer Antriebseinrichtung beaufschlagten Längsverstelleinrichtung, die ausgestaltet ist, um eine Relativverstellung zwischen dem fahrzeugseitigen Führungselement und dem sitzseitigen

Führungselement zu bewirken, wobei zwischen dem zumindest einen fahrzeugseitigen Führungselement und dem zumindest einen sitzseitigen Führungselement eine Kraftbegrenzungsvorrichtung vorgesehen ist, wobei die Längsverstelleinrichtung (42) zwischen dem sitzseitigen Führungselement (22) und der Kraftbegrenzungsvorrichtung (305) vorgesehen ist, und wobei die Kraftbegrenzungsvorrichtung ein Kraftbegrenzungselement aufweist, das einerseits mit der Längsverstelleinrichtung und andererseits mit dem fahrzeugseitigen Führungselement gekoppelt ist, zeichnet sich nach einer ersten Ausführungsform gemäß Patentanspruch 1 dadurch aus, dass das Kraftbegrenzungselement einen Verformungsabschnitt aufweist, der eine Durchtrittsöffnung mit einem von dieser ausgehenden und sich in Längsrichtung der Kraftbegrenzungsvorrichtung erstreckenden Schlitz aufweist, dass das Kraftbegrenzungselement weiterhin einen Verdrängungskörper aufweist, der sich durch die Durchtrittsöffnung erstreckt und dessen Dicke größer ist als die Breite des Schlitzes und dass der Verformungsabschnitt so ausgebildet ist, dass er sich unter einer durch den in den Schlitz eindringenden Verdrängungskörper auf ihn einwirkenden Kraft oberhalb eines vorgegebenen Kraft-Schwellenwertes verformt.

### VORTEILE

Für alle Ausführungsformen gilt, dass die Längsverstellung des Fahrzeugsitzes auf an sich bekannte Weise mit einer selbsthemmenden Längsverstelleinrichtung erfolgt, wodurch der Fahrzeugsitz in Fahrzeuglängsrichtung verstellt wird. Diese Vorrichtung lagert den Fahrzeugsitz somit beweglich relativ zur Fahrzeugstruktur. Im Fall einer Kollision ist der mit dem Insassen beladene Fahrzeugsitz aufgrund seiner Massenträgheit bestrebt, sich entgegen der auf die Fahrzeugstruktur einwirkenden Kollisionskraft weiter fortzubewegen. Da die Längsverstelleinrichtung zwischen dem sitzseitigen Führungselement und einer Kraftbegrenzungsvorrichtung vorgesehen ist, die ihrerseits mit dem fahrzeugseitigen Führungselement gekoppelt ist, bildet die Kraftbegrenzungseinrichtung den erforderlichen Freiheitsgrad, der für die erforderliche Relativbewegung zwischen dem fahrzeugseitigen Führungselement und dem sitzseitigen Führungselement benötigt wird, da die Kraftbegrenzungseinrichtung unterhalb eines vorgegebenen Kraft-Schwellenwertes in Längsrichtung, also in Richtung der erforderlichen Relativbewegung, steif und unbeweglich ist und da sie oberhalb des vorgegebene Kraft-Schwellenwertes eine Relativbewegung zulässt, bei der kinetische Energie abgebaut wird. Ausgelöst wird die kinetische Energie verzehrende Kraftbegrenzungseinrichtung durch die Kräfte, die durch Insassen, Gurtsystem und Sitz im Kollisionsfall wirken. Daher entfällt das Erfordernis, eine Entkopplung in der Längsverstelleinrichtung vornehmen zu müssen.

Bei der ersten Ausführungsform erfolgt der Energieabbau vorwiegend dadurch, dass sich der Verdrängungskörper unter einer auf die Kraftbegrenzungsvorrichtung einwirkenden Kraft oberhalb eines vorgegebenen Kraft-Schwellenwertes entlang des Schlitzes bewegt und dabei das den Schlitz umgebende Material verformt, wobei kinetische Energie in Verformungsenergie umgewandelt wird.

Bei einer zweiten, alternativen Ausführungsform gemäß Patentanspruch 3 ist zur Lösung der Aufgabe vorgesehen, dass das Kraftbegrenzungselement einen ersten Reibkörper, der mit der Längsverstelleinrichtung gekoppelt ist, und einen zweiten Reibkörper, der mit dem fahrzeugseitigen Führungselement gekoppelt ist, aufweist, wobei die beiden Reibkörper in Reibungseingriff miteinander stehen und ausgebildet sind, um sich unter einer auf sie einwirkenden Relativkraft oberhalb eines vorgegebenen Kraft-Schwellenwertes reibend relativ zueinander zu bewegen.

Bei einer dritten, alternativen Ausführungsform gemäß Patentanspruch 4 ist zur Lösung der Aufgabe vorgesehen, dass das Kraftbegrenzungselement einen ersten Schneidkörper, der mit der Längsverstelleinrichtung gekoppelt ist, und einen zweiten Schneidkörper, der mit dem fahrzeugseitigen Führungselement gekoppelt ist, aufweist, wobei die beiden Schneidkörper ausgebildet sind, um unter einer auf sie einwirkenden Relativkraft oberhalb eines vorgegebenen Kraft-Schwellenwertes in Schnitteingriff miteinander zu geraten und sich schneidend relativ zueinander zu bewegen.

Weitere bevorzugte und vorteilhafte Ausgestaltungsmerkmale der erfindungsgemäßen Fahrzeugsitzkonsole sind Gegenstand der verbleibenden Unteransprüche.

Bei der ersten Ausführungsform ist es von Vorteil, wenn der Verformungsabschnitt aus einem plastisch verformbaren Material oder alternativ einem elastisch verformbaren Material besteht oder dieses aufweist. Vorzugsweise weist die Längsverstelleinrichtung bei allen Ausführungsformen eine Spindelwelle sowie eine mit dieser in Gewindeeingriff stehende Spindelmutter auf. Durch die einem derartigen Spindelantrieb innewohnende Selbsthemmung, ist die selbsthemmende Eigenschaft in der Längsverstelleinrichtung vorgesehen.

Die Erfindung betrifft auch einen Fahrzeugsitz mit einer erfindungsgemäßen Fahrzeugsitzkonsole.

Zudem ist die Erfindung gerichtet auf ein Kraftfahrzeug mit zumindest einem erfindungsgemäßen Fahrzeugsitz.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine schematische Seitenansicht einer Fahrzeugsitzkonsole wie sie auch bei der Erfindung vorgesehen ist;
- Fig. 2: eine nicht erfindungsgemäße Ausführungsform einer durch Zugkräfte plastisch durch Strecken verformbaren Kraftbegrenzungsvorrichtung mit einem Verformungsabschnitt;
- Fig. 3: eine weitere nicht erfindungsgemäße Ausführungsform einer durch Zugkräfte plastisch durch Biegen verformbaren Kraftbegrenzungsvorrichtung mit einem Verformungsabschnitt;

- Fig. 4: eine dritte nicht erfindungsgemäße Ausführungsform einer durch Druckkräfte plastisch durch Stauchen verformbaren Kraftbegrenzungsvorrichtung mit einem Verformungsabschnitt;
- Fig. 5: eine erste Ausführungsform einer erfindungsgemäßen Kraftbegrenzungsvorrichtung mit einem Verdrängungskörper, der mit einem schlitzartigen Verformungsabschnitt zusammenwirkt;
- Fig. 6: eine zweite Ausführungsform einer erfindungsgemäßen Kraftbegrenzungsvorrichtung, die zwei miteinander im Eingriff stehende Reibkörper aufweist, und
- Fig. 7: eine dritte Ausführungsform einer erfindungsgemäßen Kraftbegrenzungsvorrichtung, die zwei miteinander im Eingriff stehende Schneidkörper aufweist.

### DARSTELLUNG VON BEVORZUGTEN AUSFÜHRUNGSBEISPIELEN

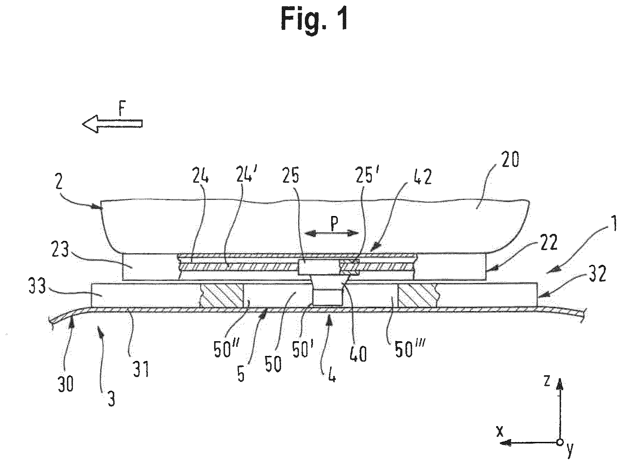

Fig. 1 zeigt in einer teilweise geschnittenen Seitenansicht schematisch eine Fahrzeugsitzkonsole 1 gemäß der vorliegenden Erfindung. Die Fahrzeugsitzkonsole 1 verbindet einen Fahrzeugsitz 2 mit dem Chassis 30 eines Fahrzeugs 3. Dazu weist die Fahrzeugsitzkonsole 1 in Fahrzeuglängsrichtung x ausgerichtete linke und rechte obere und untere Führungselemente auf, von denen in Fig. 1 nur die linken Führungselemente gezeigt sind; die rechten Führungselemente sind entsprechend aufgebaut und werden daher zur Vermeidung von Wiederholungen nicht weiter beschrieben. Das untere, fahrzeugseitige Führungselement 32 weist eine mit dem Fahrzeugboden 31 fest verbundene untere Führungsschiene 33 auf, die im Wesentlichen parallel zur Fahrzeuglängsrichtung x verläuft. Mit dieser unteren Führungsschiene 33 steht eine am Sitzboden 20 des Fahrzeugsitzes 2 angebrachte obere Führungsschiene 23 in herkömmlicher Weise in Gleiteingriff. Die obere Führungsschiene 23 bildet ein oberes, sitzseitiges Führungselement 22. Zwischen der unteren Führungsschienen 33 und der oberen Führungsschiene 23 ist eine jeweils in den Figuren nicht näher gezeigte und beschriebene obere und untere Gleitfläche ausgebildet, die vorteilhafterweise mit einem Gleitmittel versehen oder beschichtet sind. An Stelle der Gleitflächen kann auch ein Wälzlager, zum Beispiel ein Kugellager, vorgesehen sein.

Innerhalb oder neben der oberen Führungsschiene 23 ist eine Spindelwelle 24 fest angebracht, die sich im Wesentlichen über die Länge der oberen Führungsschiene 23 erstreckt und die mit einem Außengewinde 24' versehen ist. Auf der Spindelwelle 24 ist eine Spindelmutter 25 angebracht, die ein Innengewinde 25' aufweist, das mit dem Außengewinde 24' im Eingriff steht, so dass sich die Spindelwelle 24 (und mit ihr der Fahrzeugsitz 2) durch Rotation der im Normalbetrieb bezüglich der Fahrzeuglängsrichtung x stationären Spindelmutter 25 parallel zur Längsrichtung der Führungselemente 22, 32, also im eingebauten Zustand des Fahrzeugsitzes 2 parallel zur Fahrzeuglängsrichtung x, bewegen kann.

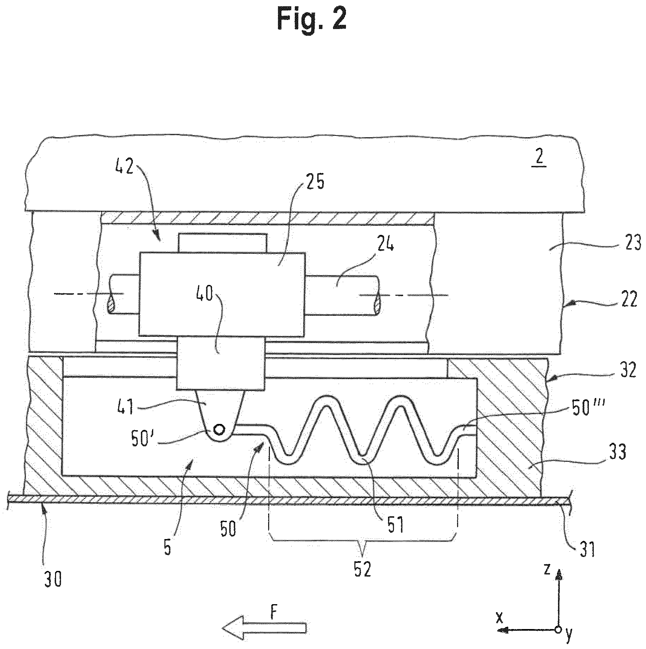

Die Spindelmutter 25 ist mit einer Kraftbegrenzungsvorrichtung 5 verbunden und ist dort in oder an einem ersten Bereich 50' eines sich im Wesentlichen parallel zur Längsrichtung der Führungselemente 22, 32, also im eingebauten Zustand des Fahrzeugsitzes parallel zur Fahrzeuglängsrichtung x, erstreckenden Kraftbegrenzungselements 50 drehbar gelagert. Die Kraftbegrenzungsvorrichtung 5 ist ihrerseits mit dem fahrzeugseitigen Führungselement 32 verbunden, wozu im gezeigten Beispiel ein zweiter Bereich 50" und ein dritter Bereich 50‴ des Kraftbegrenzungselements 50 am Fahrzeugboden 31 oder an der unteren Führungsschiene 33 angebracht sind. Zwischen dem ersten Bereich 50' und dem zweiten Bereich 50" und/oder dem dritten Bereich 50‴ des Kraftbegrenzungselements 50 erstreckt sich ein Verformungsabschnitt 52 (Fig. 2 bis Fig. 7) des Kraftbegrenzungselements 50. Dieser Verformungsabschnitt 52 ist so ausgebildet, dass er sich unter einer auf ihn einwirkenden Kraft oberhalb eines vorgegebene Kraft-Schwellenwertes verformt. Eine solche Verformung führt zu einer Verschiebung des ersten Bereichs 50' relativ zu dem zweiten und dritten Bereich 50", 50‴ des Kraftbegrenzungselements 50 und damit zu einer Verlagerung der Spindelmutter 25 relativ zur unteren Führungsschiene 33 beziehungsweise zum Fahrzeugboden 31 in Fahrzeuglängsrichtung x.

Am Fahrzeugboden 31, an der Kraftbegrenzungsvorrichtung 5 oder an der unteren Führungsschiene 33 ist beispielsweise ein Sitzverstellmechanismus 4 angeordnet. Dieser Sitzverstellmechanismus 4 weist eine Antriebseinrichtung 40, beispielsweise einen Elektromotor, auf, die über eine (nicht gezeigte) Antriebswelle mit der Spindelmutter 25 zur Drehmomentübertragung gekoppelt ist und diese mit einer Antriebskraft beaufschlagt. Eine von der Antriebseinrichtung 40 erzeugte Drehung der Antriebswelle bewirkt eine Drehung der Spindelmutter 25, aufgrund der dann die Spindelwelle 24 in Fahrtrichtung F nach vorne oder in entgegengesetzter Richtung nach hinten wandert und den Fahrzeugsitz 2 in diese Richtung mitnimmt, wie es durch den Doppelpfeil P in Fig. 1 symbolisiert ist, um eine gewollte Sitzverstellung zu bewirken.

Die untere Führungsschiene 33, die oberen Führungsschiene 23, die Spindelwelle 24 und die Spindelmutter 25 bilden auf diese Weise eine Längsverstelleinrichtung 42 für den Fahrzeugsitz 2. Die Längsverstelleinrichtung 42 bildet aufgrund des Spindelantriebs eine selbsthemmende translatorische Bewegungseinheit, die bewirkt, dass sich der Fahrzeugsitz 2 im Normalfall durch Aufbringen von äußeren Kräften nicht ungewollt verschieben kann.

Im Falle einer stärkeren Kollision des Fahrzeugs 3 mit einem Hindernis oder einem anderen Fahrzeug, bei welcher die Kollisionskraft eine wesentliche Komponente in Fahrzeuglängsrichtung x aufweist, wird das Fahrzeug 3 durch die impulsartig auftretende Kollisionskraft positiv (Heckaufprall) oder negativ (Frontalaufprall) beschleunigt. Bei dieser Beschleunigung ist der Fahrzeugsitz 2 mit der darauf sitzenden Person aufgrund der Trägheitsmasse dieser Person und des Fahrzeugsitzes 2 bestrebt, zunächst die ursprüngliche Geschwindigkeit beizubehalten, während das Fahrzeug 3 der von der kollisionsbedingt ausgeübten Beschleunigung ausgelösten Geschwindigkeitsänderung unterliegt. Dies führt dazu, dass die mit dem Fahrzeugchassis 30 fest verbundenen oder gekoppelten fahrzeugseitigen Führungselemente und die mit dem Fahrzeugsitz 2 verbundenen oder gekoppelten sitzseitigen Führungselemente aufgrund der kollisionsbedingten Kräfte bestrebt sind, eine Relativbewegung auszuführen. Diese Kräfte wirken auf den Verformungsabschnitt 52 des Kraftbegrenzungselements 50 der Kraftbegrenzungsvorrichtung 5 und verformen diesen, wodurch eine gebremste Relativbewegung des Fahrzeugsitzes 2 zum Fahrzeugchassis 30 ermöglicht wird. Die durch den Kollisionsimpuls hervorgerufene Kollisionsbeschleunigung wird folglich durch das Verformen des Verformungsabschnitts 52 gemildert, so dass die auf den Fahrzeugsitz 2 und die darauf sitzende Person einwirkende Beschleunigung geringer ist als die Kollisionsbeschleunigung. Ein Teil der kinetischen Energie des Fahrzeugsitzes 2 mit der darauf sitzenden Person wird somit in Verformungsenergie umgewandelt.

Der Aufbau und die Funktionsweise unterschiedlicher Kraftbegrenzungsvorrichtungen wird nachstehend anhand der Figuren 2 bis 7 näher erläutert, wobei die Figuren jeweils nur eine schematische Darstellung des Aufbaus der jeweiligen Kraftbegrenzungsvorrichtung 5 wiedergeben. Auch die Anbindung der Kraftbegrenzungsvorrichtung 5 an das fahrzeugseitige Führungselement 32 beziehungsweise an den Fahrzeugboden 31 sowie die Anbindung der Spindelmutter 25 an die Kraftbegrenzungsvorrichtung 5 sind lediglich schematisch dargestellt. Die Fahrtrichtung F des Fahrzeugs und damit die Einbaulage der Kraftbegrenzungsvorrichtung 5 in die erfindungsgemäße Fahrzeugsitzkonsole 1 ist ebenfalls in den Figuren jeweils angegeben.

Fig. 2 zeigt eine erste Art einer nicht erfindungsgemäßen Kraftbegrenzungsvorrichtung 5, die als Kraftbegrenzungselement 50 eine wellenartig gefaltete Zugstange 51 aufweist, deren wellenartig gefalteter Bereich den Verformungsabschnitt 52 des Kraftbegrenzungselements 50 bildet. Das Kraftbegrenzungselement 50 ist mit einem Bereich 50' seines einen Endes an einem Trägerteil 41 angebracht, das die Antriebseinrichtung 40 trägt und das die Spindelmutter 25 drehbar lagert, und mit einem Bereich 50‴ seines anderen Endes mit der unteren Führungsschiene 33 des fahrzeugseitigen Führungselements 32 fest verbunden. Ist nun im Falle einer Frontalkollision, bei der das Fahrzeugchassis 30 aufgrund der Kollisionskräfte impulsartig verzögert wird, der Fahrzeugsitz 2 bestrebt, sich in Fahrtrichtung F weiterzubewegen, so wird der wellenartige Verformungsabschnitt 52 gestreckt, während sich der Fahrzeugsitz 2 weiter in Fahrtrichtung F bewegt. Durch die dabei auftretende Verformung des wellenartigen Verformungsabschnitts 52 wird kinetische Energie des Fahrzeugsitzes 2 in Verformungsenergie umgewandelt und der Fahrzeugsitz 2 wird abgebremst, so dass die auf den Fahrzeugsitz 2 einwirkenden impulsartigen Kollisionskräfte gedämpft werden.

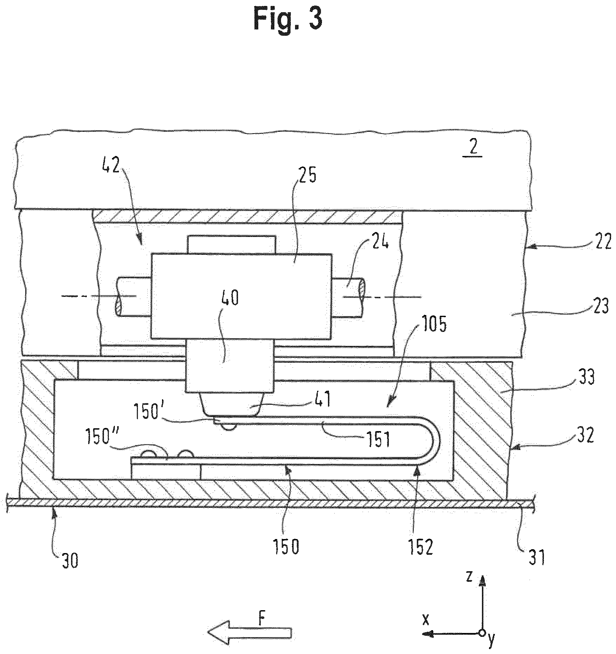

Fig. 3 zeigt eine zweite Art einer nicht erfindungsgemäßen Kraftbegrenzungsvorrichtung 105, die als Kraftbegrenzungselement 150 eine um 180° gebogene Zugstange 151 aufweist, deren Umgebungsbereich des um 180° zurückgebogenen Bereichs den Verformungsabschnitt 152 des Kraftbegrenzungselements 150 bildet. Das Kraftbegrenzungselement 150 ist mit einem Bereich 150' seines einen Endes am Trägerteil 41 angebracht, das die Antriebseinrichtung 40 trägt und das die Spindelmutter 25 drehbar lagert, und mit einem Bereich 150" seines anderen Endes mit der unteren Führungsschiene 33 des fahrzeugseitigen Führungselements 32 fest verbunden ist. Ist nun im Falle einer Frontalkollision, bei der das Fahrzeugchassis 30 aufgrund der Kollisionskräfte impulsartig verzögert wird, der Fahrzeugsitz 2 bestrebt, sich in Fahrtrichtung F weiterzubewegen, so wird der Verformungsabschnitt 152 derart verformt, dass die 180°-Krümmung der Zugstange 151 entlang des Verformungsabschnitts 152 wandert. Der zum Trägerteil 41 weisende Abschnitt der 180°-Krümmung der Zugstange 151 wird gestreckt und deren zur Anbringung an der unteren Führungsschiene 33 weisende Abschnitt wird dabei gekrümmt, wodurch jeweils kinetische Energie in Verformungsenergie umgewandelt wird.

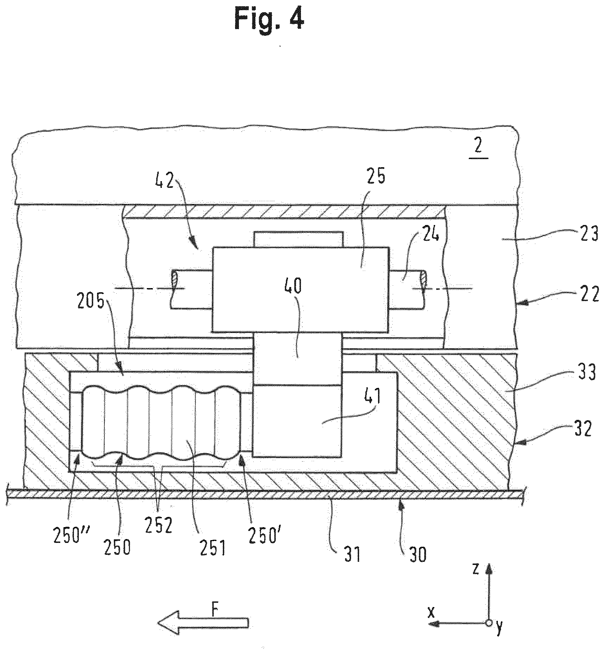

Fig. 4 zeigt eine dritte Art einer nicht erfindungsgemäßen Kraftbegrenzungsvorrichtung 205, die als Kraftbegrenzungselement 250 einen gefalteten Hohlkörper 251 aufweist, dessen Umfangswandung entlang der Längserstreckung ziehharmonikaartig oder faltenbalgartig gefaltet oder gewellt ist und dadurch den Verformungsabschnitt 252 des Kraftbegrenzungselements 250 bildet. Das Kraftbegrenzungselement 250 ist mit einem Bereich 250' seines einen Endes am Trägerteil 41 angebracht, das die Antriebseinrichtung 40 trägt und das die Spindelmutter 25 drehbar lagert, und mit einem Bereich 250" seines anderen Endes mit der unteren Führungsschiene 33 des fahrzeugseitigen Führungselements 32 fest verbunden. Ist nun im Falle einer Frontalkollision, bei der das Fahrzeugchassis 30 aufgrund der Kollisionskräfte impulsartig verzögert wird, der Fahrzeugsitz 2 bestrebt, sich in Fahrtrichtung F weiterzubewegen, so wird der Verformungsabschnitt 252 nach Art eines zusammengeschobenen Faltenbalgs komprimiert, wodurch kinetische Energie in Verformungsenergie umgewandelt wird.

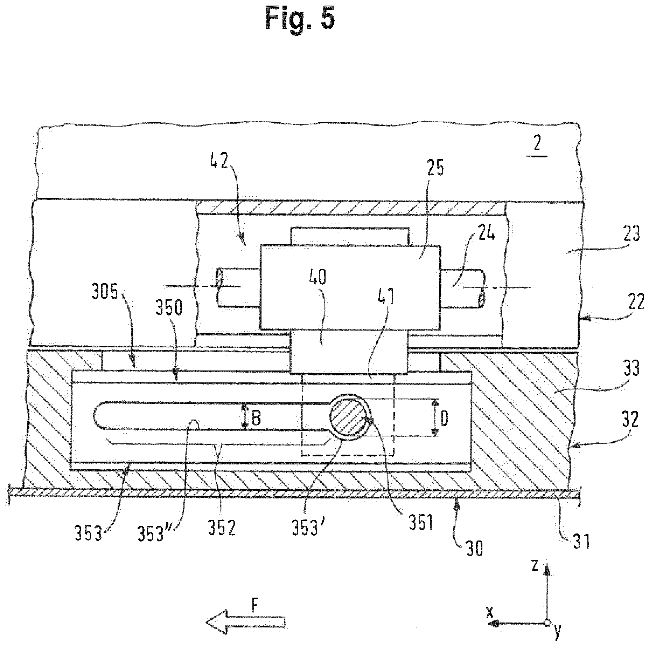

Fig. 5 zeigt eine vierte Art einer Kraftbegrenzungsvorrichtung 305 als eine erste Ausführungsform der Erfindung, die als Kraftbegrenzungselement 350 eine Kombination aus einem Verdrängungskörper 351 und einem Verformungskörper 353 mit einer Durchtrittsöffnung 353' und einem von dieser ausgehenden Schlitz 353" aufweist, der den Verformungsabschnitt 352 bildet. Der Verdrängungskörper 351, beispielsweise ein Bolzen, ist am Trägerteil 41 angebracht, das die Antriebseinrichtung 40 trägt und das die Spindelmutter 25 drehbar lagert, und greift in die Durchtrittsöffnung 353' ein. Die Dicke D des Verdrängungskörpers 351, beispielsweise der Durchmesser des Bolzens, ist größer als die Breite B des Schlitzes 353". Der den Schlitz 353" aufweisende Verformungskörper 353 ist mit der unteren Führungsschiene 33 des fahrzeugseitigen Führungselements 32 fest verbunden. Ist nun im Falle einer Frontalkollision, bei der das Fahrzeugchassis 30 aufgrund der Kollisionskräfte impulsartig verzögert wird, der Fahrzeugsitz 2 bestrebt, sich in Fahrtrichtung F weiterzubewegen, so wird der Verformungskörper 353 gegen den Verdrängungskörper 351 bewegt, wobei dieser in den Schlitz 353" hineingezwungen wird und den Schlitz 353" aufweitet, wodurch kinetische Energie in Verformungsenergie umgewandelt wird.

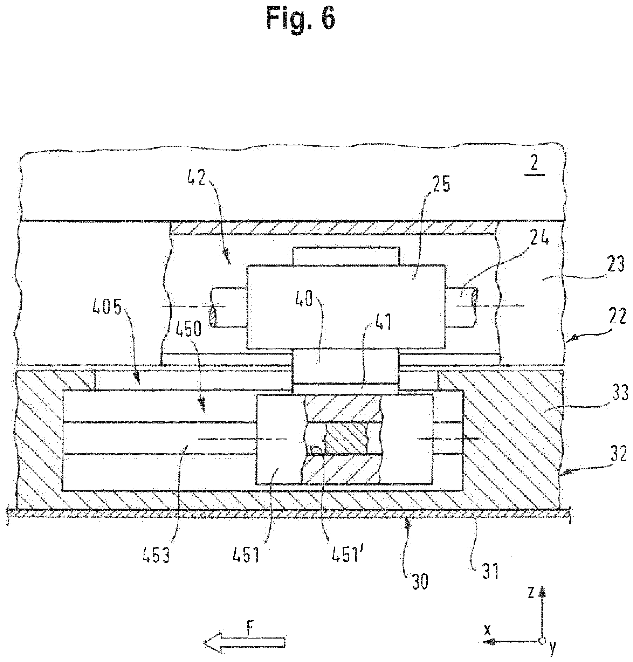

Fig. 6 zeigt eine fünfte Art einer Kraftbegrenzungsvorrichtung 405 als eine zweite Ausführungsform der Erfindung, die als Kraftbegrenzungselement 450 eine Kombination aus einem ersten, äußeren Reibkörper 451 mit einer axialen Durchtrittsöffnung 451' und einem zweiten, inneren Reibkörper 453 aufweist, wobei der innere Reibkörper 453 in die axiale Durchtrittsöffnung 451' unter Ausbildung einer Reibverbindung an den einander berührenden Flächen der Reibkörper 451, 453 eingreift. Der erste, äußere Reibkörper 451 ist am Trägerteil 41 angebracht, das die Antriebseinrichtung 40 trägt und das die Spindelmutter 25 drehbar lagert, und der zweite, innere Reibkörper 453 ist mit dem fahrzeugseitigen Führungselement 32 fest verbunden. Ist nun im Falle einer Frontalkollision, bei der das Fahrzeugchassis 30 aufgrund der Kollisionskräfte impulsartig verzögert wird, der Fahrzeugsitz 2 bestrebt, sich in Fahrtrichtung F weiterzubewegen, so wird der äußere Reibkörper 451 entlang des inneren Reibkörpers 453 gezogen, wobei die Innenwand der axialen Durchtrittsöffnung 451' des äußeren Reibkörpers 451 entlang der Außenwand des inneren Reibkörpers 453 bewegt wird. Dabei reiben die einander berührenden Flächen der Reibkörper 451, 453 gegeneinander, wodurch kinetische Energie in Reibungswärme umgewandelt wird.

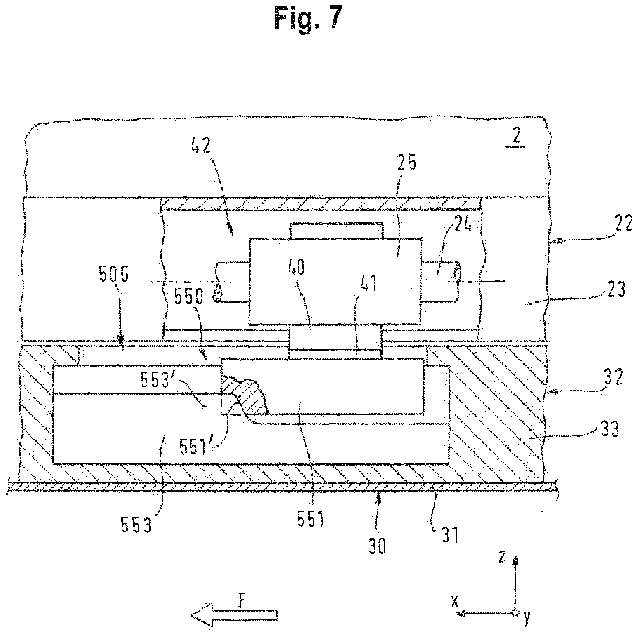

Fig. 7 zeigt eine sechste Art einer Kraftbegrenzungsvorrichtung 505 als dritte Ausführungsform der Erfindung, die als Kraftbegrenzungselement 550 eine Kombination aus einem ersten Schneidkörper 551 und einem zweiten Schneidkörper 553 aufweist. Der erste Schneidkörper 551 ist am Trägerteil 41 angebracht und der zweite Schneidkörper 553 ist mit der unteren Führungsschiene 33 des fahrzeugseitigen Führungselements 32 fest verbunden. Der zweite Schneidkörper 553 weist eine Schneidklinge 553' auf, die mit einem in Bewegungsrichtung (Fahrtrichtung) gesehen hinteren Abschnitt in eine Schnittkerbe 551' des ersten Schneidkörpers 551 eingreift. Der erste Schneidkörper 551 weist zumindest in seinem unteren, dem zweiten Schneidkörper 553 zugewandten Bereich ein Material auf, das von der Schneidklinge 553' zerschnitten werden kann. Ist nun im Falle einer Frontalkollision, bei der das Fahrzeugchassis 30 aufgrund der Kollisionskräfte impulsartig verzögert wird, der Fahrzeugsitz 2 bestrebt, sich in Fahrtrichtung F weiterzubewegen, so wird der erste Schneidkörper 551 relativ zur Schneidklinge 553' des zweiten Schneidkörpers 553 bewegt und schneidet sich ausgehend von der Schnittkerbe 551' weiter in das Material des Schneidabschnitts des ersten Schneidkörpers 551 hinein. Dadurch wird kinetische Energie in freie Oberfläche umgewandelt.

Selbstverständlich ist es bei den Varianten der Fig. 5 bis 7 auch möglich, dass die beiden Teile des jeweiligen Kraftbegrenzungselements vertauscht sind, ohne dass dadurch die Funktionalität verändert und der erfinderische Gedanke verlassen wird.

Die Erfindung ist nicht auf die obigen Ausführungsbeispiele beschränkt, die lediglich der allgemeinen Erläuterung des Kerngedankens der Erfindung dienen. Im Rahmen des Schutzumfangs kann die erfindungsgemäße Vorrichtung vielmehr auch andere als die oben beschriebenen Ausgestaltungsformen annehmen, soweit diese die Merkmale nach dem Gegenstand der Ansprüche aufweisen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Fahrzeugsitzkonsole
- 2: Fahrzeugsitz
- 3: Fahrzeug
- 4: Sitzverstellmechanismus
- 5: Kraftbegrenzungsvorrichtung
- 20: Sitzboden
- 22: oberes, sitzseitiges Führungselement
- 23: obere Führungsschiene
- 24: Spindelwelle
- 24': Außengewinde
- 25: Spindelmutter
- 25': Innengewinde
- 30: Chassis
- 31: Fahrzeugboden
- 32: unteres, fahrzeugseitiges Führungselement
- 33: untere Führungsschiene
- 40: Antriebseinrichtung
- 41: Trägerteil
- 42: Längsverstelleinrichtung
- 50: Kraftbegrenzungselement
- 50': erster Bereich
- 50": zweiter Bereich
- 50‴: dritter Bereich
- 51: Zugstange
- 52: Verformungsabschnitt
- 105: Kraftbegrenzungsvorrichtung
- 150: Kraftbegrenzungselement
- 150': Bereich
- 150": Bereich
- 151: Zugstange
- 152: Verformungsabschnitt
- 205: Kraftbegrenzungsvorrichtung
- 250: Kraftbegrenzungselement
- 250': Bereich
- 250": Bereich
- 251: Hohlkörper
- 252: Verformungsabschnitt
- 350: Kraftbegrenzungselement
- 351: Verdrängungskörper
- 352: Verformungsabschnitt
- 353: Verformungskörper
- 353': Durchtrittsöffnung
- 353": Schlitz
- 405: Kraftbegrenzungsvorrichtung
- 450: Kraftbegrenzungselement
- 451: erster, äußerer Reibkörper
- 451': Durchtrittsöffnung
- 453: zweiter, innerer Reibkörper
- 505: Kraftbegrenzungsvorrichtung
- 550: Kraftbegrenzungselement
- 551: erster Schneidkörper
- 551': Schnittkerbe
- 553: zweiter Schneidkörper
- 553': Schneidklinge

- x: Fahrzeuglängsrichtung
- F: Fahrtrichtung
- P: Doppelpfeil

## Patentansprüche

1. Fahrzeugsitzkonsole mit zumindest einem fahrzeugseitigen Führungselement (32) und zumindest einem parallel zum fahrzeugseitigen Führungselement (32) angeordneten sitzseitigen Führungselement (22) sowie zumindest einer von einer Antriebseinrichtung (40) beaufschlagten Längsverstelleinrichtung (42), die ausgestaltet ist, um eine Relativverstellung zwischen dem fahrzeugseitigen Führungselement (32) und dem sitzseitigen Führungselement (22) zu bewirken, wobei zwischen dem zumindest einen fahrzeugseitigen Führungselement (32) und dem zumindest einen sitzseitigen Führungselement (22) eine Kraftbegrenzungsvorrichtung (305) vorgesehen ist, wobei die Längsverstelleinrichtung (42) zwischen dem sitzseitigen Führungselement (22) und der Kraftbegrenzungsvorrichtung (305) vorgesehen ist, und wobei die Kraftbegrenzungsvorrichtung (305) ein Kraftbegrenzungselement (350) aufweist, das einerseits mit der Längsverstelleinrichtung (42) und andererseits mit dem fahrzeugseitigen Führungselement (32) gekoppelt ist,
**dadurch gekennzeichnet,**
**dass** das Kraftbegrenzungselement (350) einen Verformungsabschnitt (352) aufweist, der eine Durchtrittsöffnung (353') mit einem von dieser ausgehenden und sich in Längsrichtung der Kraftbegrenzungsvorrichtung (305) erstreckenden Schlitz (353") aufweist, dass das Kraftbegrenzungselement (350) weiterhin einen Verdrängungskörper (351) aufweist, der sich durch die Durchtrittsöffnung (353') erstreckt und dessen Dicke größer ist als die Breite des Schlitzes (353") und
**dass** der Verformungsabschnitt (352) so ausgebildet ist, dass er sich unter einer durch den in den Schlitz (353") eindringenden Verdrängungskörper (351) auf ihn einwirkenden Kraft oberhalb eines vorgegebenen Kraft-Schwellenwertes verformt.

2. Fahrzeugsitzkonsole nach Anspruch 1
**dadurch gekennzeichnet,**
**dass** der Verformungsabschnitt (352) vorzugsweise aus einem plastisch verformbaren Material oder alternativ einem elastisch verformbaren Material besteht oder dieses aufweist.

3. Fahrzeugsitzkonsole mit zumindest einem fahrzeugseitigen Führungselement (32) und zumindest einem parallel zum fahrzeugseitigen Führungselement (32) angeordneten sitzseitigen Führungselement (22) sowie zumindest einer von einer Antriebseinrichtung (40) beaufschlagten Längsverstelleinrichtung (42), die ausgestaltet ist, um eine Relativverstellung zwischen dem fahrzeugseitigen Führungselement (32) und dem sitzseitigen Führungselement (22) zu bewirken, wobei zwischen dem zumindest einen fahrzeugseitigen Führungselement (32) und dem zumindest einen sitzseitigen Führungselement (22) eine Kraftbegrenzungsvorrichtung (405) vorgesehen ist, wobei die Längsverstelleinrichtung (42) zwischen dem sitzseitigen Führungselement (22) und der Kraftbegrenzungsvorrichtung (305) vorgesehen ist, und wobei die Kraftbegrenzungsvorrichtung (405) ein Kraftbegrenzungselement (450) aufweist, das einerseits mit der Längsverstelleinrichtung (42) und andererseits mit dem fahrzeugseitigen Führungselement (32) gekoppelt ist, **dadurch gekennzeichnet, dass** das Kraftbegrenzungselement (450) einen ersten Reibkörper (451), der mit der Längsverstelleinrichtung (42) gekoppelt ist, und einen zweiten Reibkörper (453), der mit dem fahrzeugseitigen Führungselement (32) gekoppelt ist, aufweist, wobei die beiden Reibkörper (451, 453) in Reibungseingriff miteinander stehen und ausgebildet sind, um sich unter einer auf sie einwirkenden Relativkraft oberhalb eines vorgegebenen Kraft-Schwellenwertes reibend relativ zueinander zu bewegen.

4. Fahrzeugsitzkonsole mit zumindest einem fahrzeugseitigen Führungselement (32) und zumindest einem parallel zum fahrzeugseitigen Führungselement (32) angeordneten sitzseitigen Führungselement (22) sowie zumindest einer von einer Antriebseinrichtung (40) beaufschlagten Längsverstelleinrichtung (42), die ausgestaltet ist, um eine Relativverstellung zwischen dem fahrzeugseitigen Führungselement (32) und dem sitzseitigen Führungselement (22) zu bewirken, wobei zwischen dem zumindest einen fahrzeugseitigen Führungselement (32) und dem zumindest einen sitzseitigen Führungselement (22) eine Kraftbegrenzungsvorrichtung (505) vorgesehen ist, wobei die Längsverstelleinrichtung (42) zwischen dem sitzseitigen Führungselement (22) und der Kraftbegrenzungsvorrichtung (305) vorgesehen ist, und wobei die Kraftbegrenzungsvorrichtung (505) ein Kraftbegrenzungselement (550) aufweist, das einerseits mit der Längsverstelleinrichtung (42) und andererseits mit dem fahrzeugseitigen Führungselement (32) gekoppelt ist, **dadurch gekennzeichnet, dass** das Kraftbegrenzungselement (550) einen ersten Schneidkörper (551), der mit der Längsverstelleinrichtung (42) gekoppelt ist, und einen zweiten Schneidkörper (553), der mit dem fahrzeugseitigen Führungselement (32) gekoppelt ist, aufweist, wobei die beiden Schneidkörper (551, 553) ausgebildet sind, um unter einer auf sie einwirkenden Relativkraft oberhalb eines vorgegebenen Kraft-Schwellenwertes in Schnitteingriff miteinander zu geraten und sich schneidend relativ zueinander zu bewegen.

5. Fahrzeugsitzkonsole nach einem der vorhergehenden Ansprüche,
**dadurch gekennzeichnet,**
**dass** die Längsverstelleinrichtung (42) eine Spindelwelle (24) sowie eine mit dieser in kämmendem Eingriff stehende Spindelmutter (25) aufweist.

6. Fahrzeugsitz mit einer Fahrzeugsitzkonsole (1) nach einem der vorhergehenden Ansprüche.

7. Kraftfahrzeug mit zumindest einem Fahrzeugsitz (2) nach Anspruch 6.

## Claims

1. Vehicle seat console having at least one vehicle-mounted guide element (32) and at least one seat-mounted guide element (22), which is arranged parallel to the vehicle-mounted guide element (32), and at least one longitudinal adjustment device (42), which is activated by a drive device (40) and is configured to effect a relative adjustment between the vehicle-mounted guide element (32) and the seat-mounted guide element (22), wherein a force-limiting device (305) is provided between the at least one vehicle-mounted guide element (32) and the at least one seat-mounted guide element (22), wherein the longitudinal adjustment device (42) is provided between the seat-mounted guide element (22) and the force-limiting device (305), and wherein the force-limiting device (305) has a force-limiting element (350) which is coupled on the one hand to the longitudinal adjustment device (42) and on the other hand to the vehicle-mounted guide element (32), **characterized in that** the force-limiting element (350) has a deformation portion (352) which has a through-opening (353') with a slit (353") originating therefrom and extending in the longitudinal direction of the force-limiting device (305), **in that** the force-limiting element (350) moreover has a displacement body (351), which extends through the through-opening (353') and whose thickness is greater than the width of the slit (353"), and **in that** the deformation portion (352) is designed such that it deforms when a force applied to it by the displacement body (351) penetrating into the slit (353') is above a predetermined force threshold value.

2. Vehicle seat console according to Claim 1, **characterized in that** the deformation portion (352) is preferably made of or has a plastically deformable material or alternatively an elastically deformable material.

3. Vehicle seat console having at least one vehicle-mounted guide element (32) and at least one seat-mounted guide element (22), which is arranged parallel to the vehicle-mounted guide element (32), and at least one longitudinal adjustment device (42), which is activated by a drive device (40) and is configured to effect a relative adjustment between the vehicle-mounted guide element (32) and the seat-mounted guide element (22), wherein a force-limiting device (405) is provided between the at least one vehicle-mounted guide element (32) and the at least one seat-mounted guide element (22), wherein the longitudinal adjustment device (42) is provided between the seat-mounted guide element (22) and the force-limiting device (305), and wherein the force-limiting device (405) has a force-limiting element (450) which is coupled on the one hand to the longitudinal adjustment device (42) and on the other hand to the vehicle-mounted guide element (32), **characterized in that** the force-transmitting element (450) has a first friction body (451), which is coupled to the longitudinal adjustment device (42), and a second friction body (453), which is coupled to the vehicle-mounted guide element (32), wherein the two friction bodies (451, 453) are in frictional engagement with each other and are designed to move relative to each other with friction when they are subjected to a relative force above a predetermined force threshold value.

4. Vehicle seat console having at least one vehicle-mounted guide element (32) and at least one seat-mounted guide element (22), which is arranged parallel to the vehicle-mounted guide element (32), and at least one longitudinal adjustment device (42), which is activated by a drive device (40) and is configured to effect a relative adjustment between the vehicle-mounted guide element (32) and the seat-mounted guide element (22), wherein a force-limiting device (505) is provided between the at least one vehicle-mounted guide element (32) and the at least one seat-mounted guide element (22), wherein the longitudinal adjustment device (42) is provided between the seat-mounted guide element (22) and the force-limiting device (305), and wherein the force-limiting device (505) has a force-limiting element (550) which is coupled on the one hand to the longitudinal adjustment device (42) and on the other hand to the vehicle-mounted guide element (32), **characterized in that** the force-limiting element (550) has a first cutting body (551), which is coupled to the longitudinal adjustment device (42), and a second cutting body (553), which is coupled to the vehicle-mounted guide element (32), wherein the two cutting bodies (551, 553) are designed to come into cutting engagement with each other and move in a cutting motion relative to each other when acted upon by a relative force above a predetermined force threshold value.

5. Vehicle seat console according to one of the preceding claims, **characterized in that** the longitudinal adjustment device (42) has a spindle shaft (24) and a spindle nut (25) in meshing engagement with the latter.

6. Vehicle seat having a vehicle seat console (1) according to one of the preceding claims.

7. Motor vehicle having at least one vehicle seat (2) according to Claim 6.

## Revendications

1. Base de siège de véhicule, comprenant au moins un élément de guidage côté véhicule (32) et au moins un élément de guidage côté siège (22) disposé parallèlement à l'élément de guidage côté véhicule (32), ainsi qu'au moins un dispositif de réglage longitudinal (42), sollicité par un dispositif d'entraînement (40), lequel dispositif de réglage est configuré pour provoquer un réglage relatif entre l'élément de guidage côté véhicule (32) et l'élément de guidage côté siège (22), un dispositif de limitation de force (305) étant prévu entre l'au moins un élément de guidage côté véhicule (32) et l'au moins un élément de guidage côté siège (22), le dispositif de réglage longitudinal (42) étant prévu entre l'élément de guidage côté siège (22) et le dispositif de limitation de force (305), et le dispositif de limitation de force (305) présentant un élément de limitation de force (350) qui est accouplé d'une part au dispositif de réglage longitudinal (42) et d'autre part à l'élément de guidage côté véhicule (32),
**caractérisée en ce que**
l'élément de limitation de force (350) présente une partie de déformation (352) qui présente une ouverture traversante (353') dotée d'une fente (353'') qui part de celle-ci et s'étend dans la direction longitudinale du dispositif de limitation de force (305),
**en ce que** l'élément de limitation de force (350) présente en outre un corps de refoulement (351) qui s'étend à travers l'ouverture traversante (353') et dont l'épaisseur est supérieure à la largeur de la fente (353") et
**en ce que** la partie de déformation (352) est réalisée de telle sorte qu'elle se déforme sous l'effet d'une force agissant sur celle-ci par le biais du corps de refoulement (351) pénétrant dans la fente (353") et supérieure à une valeur seuil de force prédéfinie.

2. Base de siège de véhicule selon la revendication 1,
**caractérisée en ce que**
la partie de déformation (352) est constituée de préférence d'une matière déformable plastiquement ou en variante d'une matière déformable élastiquement ou présente cette matière.

3. Base de siège de véhicule comprenant au moins un élément de guidage côté véhicule (32) et au moins un élément de guidage côté siège (22) disposé parallèlement à l'élément de guidage côté véhicule (32), ainsi qu'au moins un dispositif de réglage longitudinal (42), sollicité par un dispositif d'entraînement (40), lequel dispositif de réglage est configuré pour provoquer un réglage relatif entre l'élément de guidage côté véhicule (32) et l'élément de guidage côté siège (22), un dispositif de limitation de force (405) étant prévu entre l'au moins un élément de guidage côté véhicule (32) et l'au moins un élément de guidage côté siège (22), le dispositif de réglage longitudinal (42) étant prévu entre l'élément de guidage côté siège (22) et le dispositif de limitation de force (305), et le dispositif de limitation de force (405) présentant un élément de limitation de force (450) qui est accouplé d'une part au dispositif de réglage longitudinal (42) et d'autre part à l'élément de guidage côté véhicule (32),
**caractérisée en ce que**
l'élément de limitation de force (450) présente un premier corps de friction (451), qui est accouplé au dispositif de réglage longitudinal (42), et un deuxième corps de friction (453), qui est accouplé à l'élément de guidage côté véhicule (32), les deux corps de friction (451, 453) étant en prise par friction avec l'autre et étant réalisés pour se déplacer l'un par rapport à l'autre avec friction sous l'effet d'une force relative agissant sur ceux-ci et supérieure à une valeur seuil de force prédéfinie.

4. Base de siège de véhicule comprenant au moins un élément de guidage côté véhicule (32) et au moins un élément de guidage côté siège (22) disposé parallèlement à l'élément de guidage côté véhicule (32), ainsi qu'au moins un dispositif de réglage longitudinal (42), sollicité par un dispositif d'entraînement (40), lequel dispositif de réglage est configuré pour provoquer un réglage relatif entre l'élément de guidage côté véhicule (32) et l'élément de guidage côté siège (22), un dispositif de limitation de force (505) étant prévu entre l'au moins un élément de guidage côté véhicule (32) et l'au moins un élément de guidage côté siège (22), le dispositif de réglage longitudinal (42) étant prévu entre l'élément de guidage côté siège (22) et le dispositif de limitation de force (305), et le dispositif de limitation de force (505) présentant un élément de limitation de force (550) qui est accouplé d'une part au dispositif de réglage longitudinal (42) et d'autre part à l'élément de guidage côté véhicule (32),
**caractérisée en ce que**
l'élément de limitation de force (550) présente un premier corps de coupe (551), qui est accouplé au dispositif de réglage longitudinal (42), et un deuxième corps de coupe (553), qui est accouplé à l'élément de guidage côté véhicule (32), les deux corps de coupe (551, 553) étant réalisés pour venir en engagement de coupe l'un avec l'autre et pour se déplacer l'un par rapport à l'autre de manière coupante sous l'effet d'une force relative agissant sur ceux-ci et supérieure à une valeur seuil de force prédéfinie.

5. Base de siège de véhicule selon l'une des revendications précédentes,
**caractérisée en ce que**
le dispositif de réglage longitudinal (42) présente un arbre de broche (24) ainsi qu'un écrou de broche (25) en prise par engrènement avec celui-ci.

6. Siège de véhicule comprenant une base de siège de véhicule (1) selon l'une des revendications précédentes.

7. Véhicule automobile comprenant au moins un siège de véhicule (2) selon la revendication 6.
